# EUROPEAN PATENT SPECIFICATION

(11) **EP 0 361 141 B1**
(45) Date of publication and mention of the grant of the patent: **09.08.1995**
(21) Application number: 89116371.9
(22) Date of filing: 05.09.1989
(51) Int. Cl.: B65D 1/02, B29C 49/06

(54) **Stretch blow molding method for manufacturing an expanded bottle, a parison deforming mold for deforming or curving a stretch parison, and a stretch blow molded bottle**
Streckblasformverfahren zur Herstellung einer expandierten Flasche, Deformiervorrichtung zum Deformieren oder Biegen eines Streckvorformlings und streckblasgeformte Flasche
Procédé de moulage par étirage-soufflage pour la fabrication de bouteilles expansées, moule de déformation d'une préforme pour déformer ou plier une préforme d'étirage et bouteille moulée par étirage-soufflage

(30) Priority: 06.09.1988 JP 223301/88; 04.10.1988 JP 250612/88; 07.10.1988 JP 253405/88
(43) Date of publication of application: 04.04.1990
(73) Proprietor: DAI NIPPON INSATSU KABUSHIKI KAISHA, Tokyo-To (JP)
(72) Inventor: Yamada, Tsutoo, Tokyo-to (JP); Shibuya, Takemi, Higashiyamato-shi Tokyo-to (JP)
(74) Representative: Grünecker, Kinkeldey, Stockmair & Schwanhäusser Anwaltssozietät

(56) References cited:
- EP-A- 0 182 217
- FR-A- 2 605 291
- GB-A- 2 214 498
- JP-U-56 150 763
- US-A- 3 470 283
- US-A- 3 944 642
- US-A- 4 618 076

## Description

The present invention relates to a stretch blow molding method for manufacturing an expanded bottle, a parison deforming mold for deforming or curving a stretch parison for carrying out a process of a stretching blow molding method for manufacturing a stretch bottle, and a stretched blow molded bottle.

A bottle made of thermoplastic resin such as polyester or the like is widely used for a container for drinks or beverages. The bottle has generally a mouth portion coaxially with its body portion.

Such a bottle is disclosed in Japanese Utility Model Laid-Open Publication 56-150763. Each of these conventional bottles has a mouth portion coaxially with a main body subjected to an biaxial stretching operation, and the mouth portion has bellows or a transformable portion for inclining the mouth portion.

However, the mouth portion can be inclined by the provision of the transforming means such as bellows, and, therefore, there exists extra recessed and projected portions at the mouth portion or the body portion thereof. Contents of the bottle are apt to be left in the transforming means, and a smooth flow of the contents is obstructed. Further, the surface area of the bottle is increased, and a gas barrier property or the like is lost. In addition, since the complicated transforming portion such as the bellows must be provided, the cost for manufacturing the bottles is increased.

In a portable bottle such as a whisky bottle, a bottle having a flat or book-like shape is desirable in view of fashion, and people want a portable bottle having an inclined mouth portion in view of its handling. However, it is difficult to manufacture a flat bottle having an inclined mouth portion by a conventional biaxial orientation blow or stretching molding. That is, in the conventional blow molding for stretching a parison in the longitudinal direction, the parison is not stretched in an even manner thereby to cause some corner portions whose wall thicknesses are remarkably thin. Therefore, a good bottle having a high quality cannot be obtained.

From US-A-3 470 283 a method for making hollow plastic containers with off-set finish is known, having a body and an off-set finish from a tubular parison, which is extruded from an extrusion orifice. The end exposed at the extrusion orifice is severed and displaced relative to the orifice to position the parison diagonally of the blow mold covered in prior to closing of the blow mold therearound.

FROM US-A-3 944 642 a method for blow molding articles, such as handle containers, is known having injection molded portions integrally formed with blow molded portions. The method includes forming a tubular blowable parison, blowing this parison in a pre-formed mold, and then blowing the pre-form to its final shape in the final blow mold. The utilization of the pre-form mold as an intermediate step should make possible the formation of containers of enhanced physical characteristics, with the elimination of external flush or raised portions, and the formation of a final article having an injection molded portion integrated with a biaxially oriented blow portion. The respective parison is disposed obliquely in the cavity and is not stretched by the deforming mold.

It is an object of the present invention to provide a stretch blow molding method for manufacturing an expanded bottle having a high quality and an inclined mouth, to provide a parison deforming mold for deforming or curving a stretch parison for carrying out the stretch blow molding method for manufacturing a stretch mold and provide such a stretched blow molded bottle.

This object is achieved by the features of claims 1, 10 and 14, respectively.

Further preferred embodiments of the method, the parison deforming mold and the stretch blow molded bottle, are contained in the respective subclaims.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

In the accompanying drawings:
FIG. 1 is a front view of a bottle of this invention formed by a biaxial orientation operation;
FIG.2 is a side view of the bottle of FIG. 1;
FIG. 3 is a cross sectional view of the blow mold for showing a state wherein a parison is subject to a stretching blow molding operation of this invention;
FIG. 4 is a longitudinal sectional view of a parison having not been stretched;
FIG. 5 is a vertically sectional view showing a state wherein a parison is stretched in its longitudinal direction;
FIG. 6 is a vertically sectional view of a deforming mold for curving a parison;
FIG. 7 is a sectional view taken along the line XVII-XVII in FIG. 6;
FIG. 8 is an explanatory view showing a first step of a parison deforming process;
FIG. 9 is an explanatory view showing a second step of the parison deforming process;
FIG.10 is an explanatory view showing a third step of the parison deforming process;
FIG. 11 is an explanatory view showing a fourth step of the parison deforming process;
FIG.12 is a front view of a parison deforming apparatus of this invention;
FIG.13 is a front view of a parison deforming mold in a state wherein the deforming mold is closed;
FIG.14 is a vertically sectional view of the deforming mold of FIG 12;
FIG.15 is a vertically sectional view of the deforming mold of FIG.13;
FIG.16 is a sectional view taken along the line XXVI-XXVI in FIG.14;
FIG.17 is a sectional view taken along the line XXVII-XXVII in FIG.14;
FIG.18 is an explanatory view showing a first step of another parison deforming process;
FIG.19 is an explanatory view showing a second step of the parison deforming process;
FIG.20 is an explanatory view showing a third step of the parison deforming process;
FIG.21 is an explanatory view showing a fourth step of the parison deforming process.

### DETAILED DESCRIPTION OF THE INVENTION

### First Embodiment

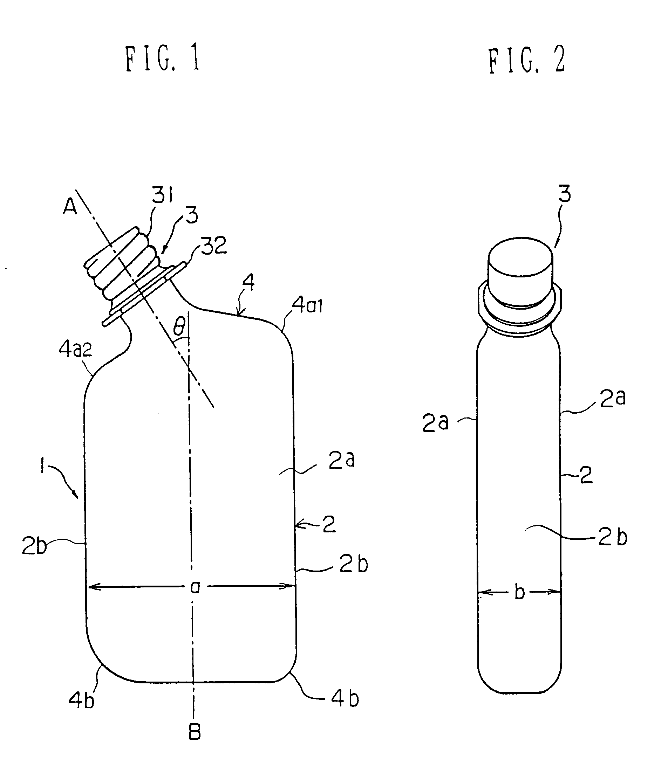

FIGS.1 and 2 show a first embodiment. In FIGS.1 and 2, a bottle 1 comprises a rectangular body portion 2, a cylindrical mouth portion 3, and a shoulder portion 4 between the body portion 2 and the mouth portion 3. The body portion 2 is flat and rectangular, and the thickness b of the body portion 2 is sufficiently small with respect to the width a thereof. The corners and edges of the body portion 2 have smooth curved shapes. The mouth portion 3 has a thread portion 31 and a flange 32. The center line A of the mouth portion 3 is inclined at an angle ϑ with respect to the center line B of the body portion 2. The inclined angle ϑ is properly determined and, however, is preferably determined at 30° to 45° in view of design or utility. The center line A is parallel to the side surfaces 2a, 2a of the body portion 2, and the mouth portion 3 is not projected laterally from the extensions of the side surfaces 2a, 2a, and the front and back surfaces 2b, 2b. Accordingly, the bottle 1 can be smoothly inserted in a pocket or the like, and it is convenient to pour content of the bottle 1 into a cup or the like. Since the mouth portion 3 is inclined, the right shoulder 4a₁ is formed largely while the left shoulder 4a₂ is formed small. However, either one should be a smooth curved surface. This shape ensures a smooth insertion into a pocket or the like.

The inventors of this invention found that a bottle having an inclined mouth can be easily manufactured, without using a curved stretching rod, by supplying compressed air into a curved parison held in a cavity.

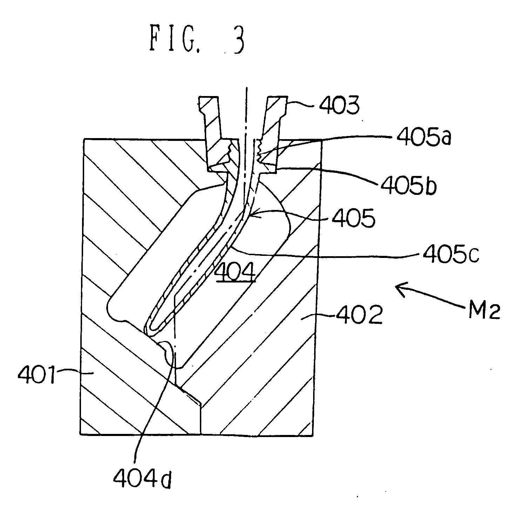

That is, as shown in FIG. 3, a stretched and curved parison 405 is set in a cavity 404. First, the straight parison is subjected to a uniaxial orientation or stretching operation to be stretched longitudinally. Then the stretched parison 405 is curved so that the bottom end of the parison 405 contacts an approximately center portion of a raised portion 404d. with this state, compressed air is supplied into the curved and stretched parison 405. The magnification of stretching of a bottle formed in this manner is the same at each part of a body portion 405c.

The parison 405 has a mouth portion 405a, a flange portion 405b and a cylindrical body portion 405c having a bottom. The curved state of the parison 405 is determined according to a desired shape of the bottle to be formed. In general, in the case of manufacturing of a bottle having a relatively long body portion, a curved portion is located near its mouth portion with a straight portion located on the bottom side thereof. Further, the body portion 405c may be curved uniformly at the same radius of curvature and may have a different radius of curvature at a certain part from other parts.

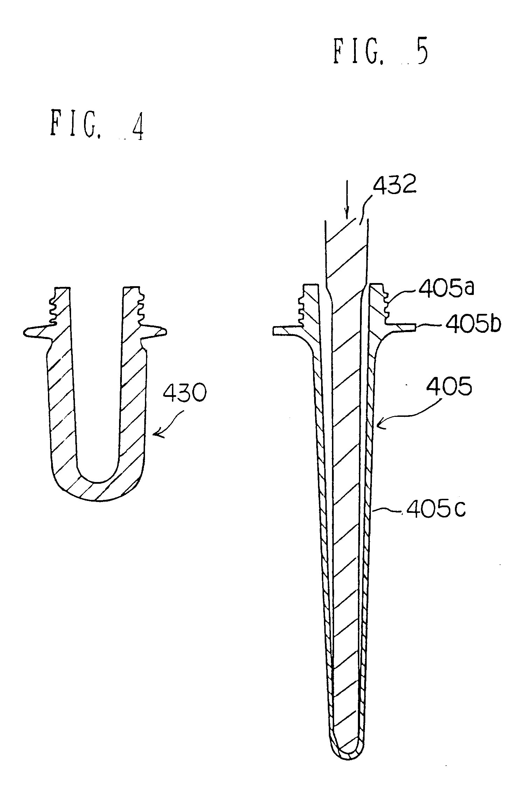

The stretched and deformed parison 405 is formed in the following manner. First, a normal parison 430, as shown in FIG. 4, is prepared by a normal way and is, then, subjected to a uniaxial stretching operation. That is, a straight stretching rod 432 is, as shown in FIG. 5, inserted gradually deeply into the normal parison 430 to stretch it longitudinally. The length of the body portion 405c is determined so that the bottom of the body portion 405c contacts the center position of the bottom of the cavity 404.

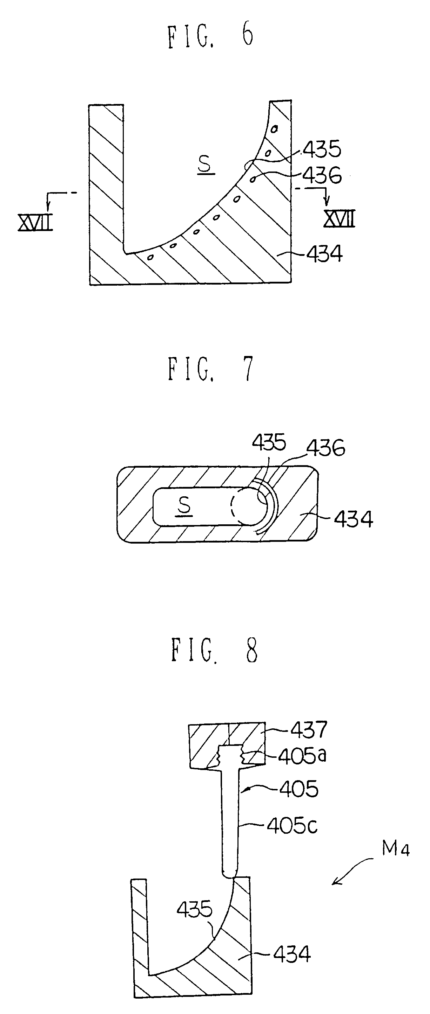

The stretched parison 405 is curved or bent by the following device as shown in FIGS. 6 to 11. In FIGS. 6 and 7, a deforming mold 434 has a flat space S as viewed from its upper position. The space S is defined by a curved surface 435 which has an arc shape in vertical section (FIG. 6) and a semicircular shape in cross section (FIG. 7). The surface 435 may be formed so as to have various shapes. If the surface 435 is formed in a manner that the radius of curvature near the upper opening is determined at a maximum value, the difference in magnification of stretching becomes minimum as a whole when the bottle is formed.

Along the surface 435 is provided some heaters 436 for maintaining a softened condition of the deformed parison.

FIGS. 8 to 11 show a process for deforming the parison 405.

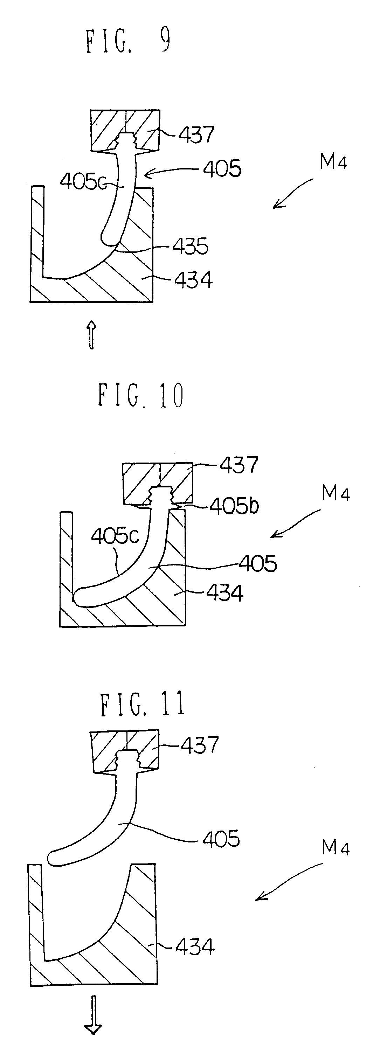

A softened straight parison 405 is held by a holder 437 which forms a parison deforming apparatus M₄ with the deforming mold 434. At this time, the lower end of the parison 405 contacts the upper end of the above surface 435 of the mold 434. Then, the mold 434 is slowly raised and the body portion 405c of the parison 405 slidably contacts the curved surface 435 to be curved along the arched surface 435. When the flange portion 405b of the parison 405 abuts against the upper surface of the mold 434, the mold 434 is stopped, as shown in FIG 10, to complete a deformation of the parison 405. Thereafter, the mold 434 is moved downward to take the deformed parison 405 out of the mold 434. Thus deformed parison 405 is set in the blow mold M₂, as shown in FIG. 3 in a state wherein the bottom end of the parison 405 contacts the center position of the raised bottom portion 404d of the cavity 404. Then, compressed air is supplied into the deformed parison 405 to obtain a bottle which is stretched at almost the same magnification of stretching at all wall portions of the bottle and which has almost the same thickness of the walls at all parts of the bottle.

The material of the deformed parison 405 may be polyethylene terephtalate resin. Further, as material of the deformed parison, various muti-layer resins may be used.

The concrete example of this embodiment will now be explained.

First, a straight cylindrical parison made of polyethylene terephthalate resin was prepared. The thickness of the wall of the body portion of the parison was 3.2mm. The parison was heated at 95°C to 120°C to be softened, and, then, a uniaxial stretching operation was performed by inserting longitudinally a stretching rod into the parison. Thus obtained parison had a body portion whose wall thickness was 2.1mm. The stretched parison was deformed by the deforming mold 434 and through the process shown in FIGS. 8 to 11. The deforming mold 434 was maintained at a temperature of about 90°C Thus deformed parison had a body portion curved smoothly and an appoximately circular shape in cross section. The deformed parison was set in the blow mold M₂. At this time, the lower end of the parison abutted against the center position of the bottom surface of the cavity 404. Then, a free blow molding was performed without using a stretching rod. The temperature of the blow mold M₂ was then about 50°C and compressed air had a temperature of 20°C and an atmospheric pressure of 28. Thus obtained bottle had a body portion with an approximately uniform thickness (about 0.35mm) of its wall, and a thick portion (corresponding to the projected center position of the bottom of the parison) of wall was located at the center portion of the bottom of the bottle.

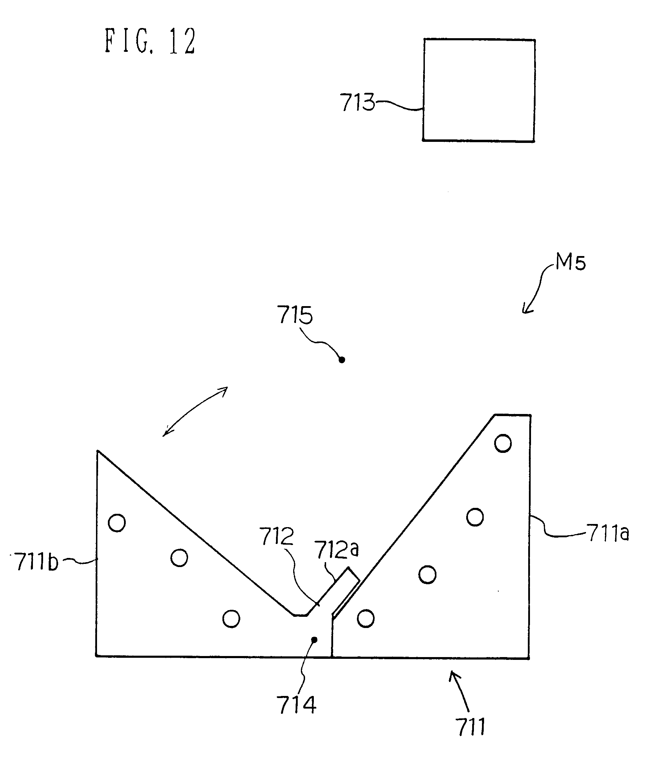

FIG 12 shows another parison deforming apparatus M₅ for bending the stretched parison 405 in one direction, this is, in its longitudinal direction.

The apparatus M₅ has a deforming mold 711 formed of a main body 711a and a supplementary body 711b pivotably connected to the main body 711a by a pin 714. The deforming mold 711 is moved upward and downward. The apparatus M₅ further has a holder 713 for holding the stretched parison 405. The holder 713 is fixed to a fixing member (not shown). The supplementary body 711b can be closed and opened and has a handle portion 712 near the pivot pin 714. The fixing member is provided with an operating pin 715 for operating the supplementary body 711b.

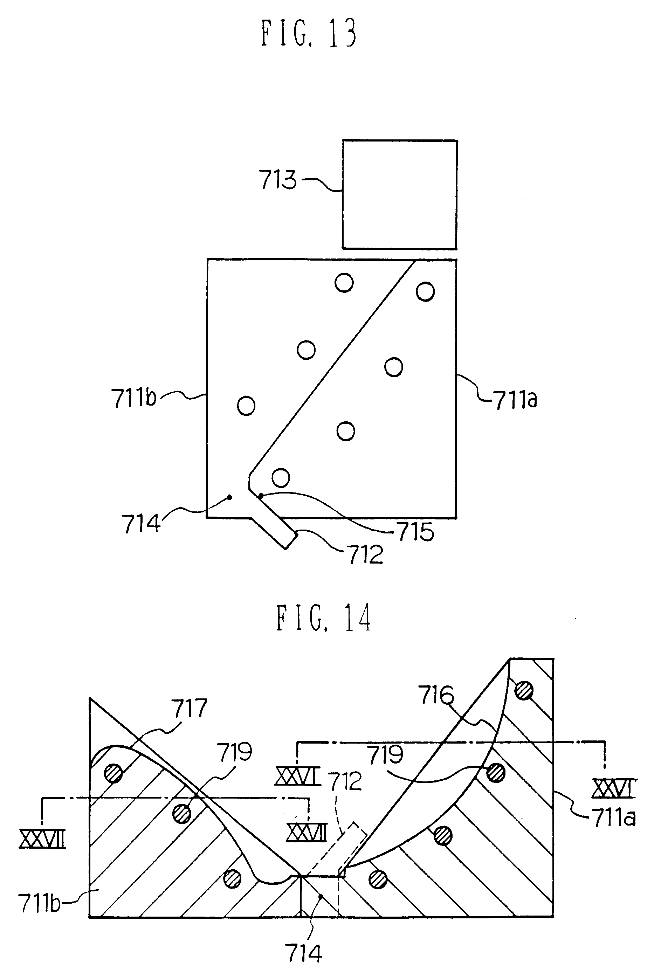

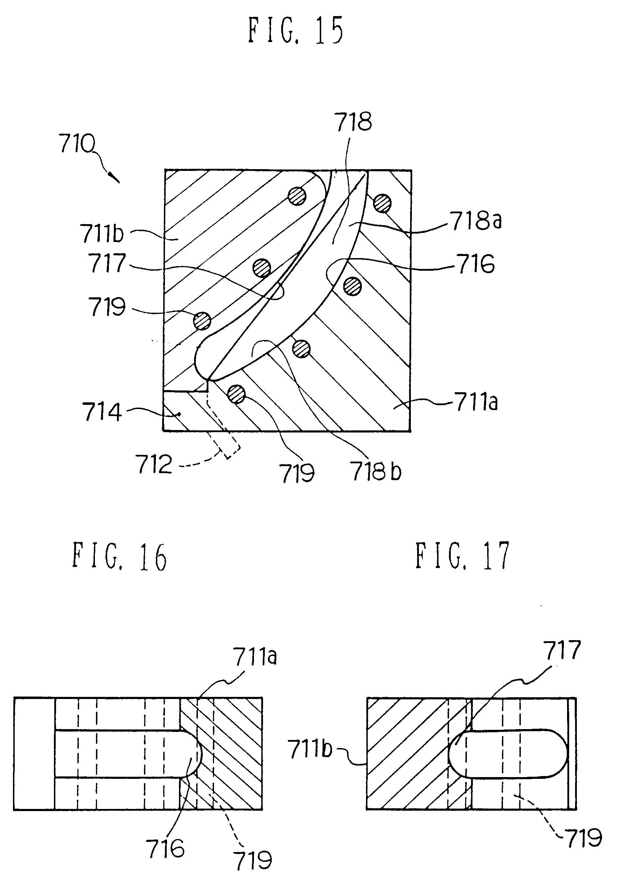

That is, when the deforming mold 711 is raised with the supplementary body 711b being opened, the upper surface 712a of the handle portion 712 abuts against the operating pin 715. When the deforming mold 711 is moved upward further, the engagement of the operating pin 715 and the handle portion 712 causes the supplementary body 711b to move in the clockwise direction as viewed in FIG.12 thereby to close the main body 711a as shown in FIG.13. The supplementary body 711b is urged by e.g., a spring (not shown) to open the main body 711a, and, therefore, the supplementary body 711b is swung in the counterclockwise direction to open the main body 711a when the deforming mold 711 is lowered. As shown in FIGS.14 to 17, the main body 711a and the supplementary body 711b are provided with two arched surfaces 716 and 717, respectively. The arched surface 716 is curved downward while the arched surface 717 is curved upward, and the two curved surfaces 716, 717 are opposed to each other to form a curved space 718 for receiving the deformed parison 405 when the deforming mold 711 is closed. The space 718 has a circular shape in cross section and each of the surfaces 716, 717 has a semicircular shape in cross section as shown in FIGS.16 and 17. As mentioned before, if the radius of curvature at a portion 718a near the opening of the space 718 is determined minimum, the difference in the magnification of stretching at each position of the parison becomes minimum as a whole when the parison is stretched by compressed air. Accordingly, it is preferable that the magnitude of radius of curvature at an upper portion 718a is relatively large while the magnitude of radius of curvature at a lower portion 718b is relatively small. The diameter and the magnitude of curvature of the space 718 are properly determined according to the condition of the parison to be formed.

Along the curved surfaces 716, 717 are provided a plurality of heaters 719 at a predetermined interval for maintaining a softened condition of the parison while the parison is deformed and for adjusting distribution of temperature of the parison. A heating elemement such as a thermoelectric element may be substituted for the heaters 719.

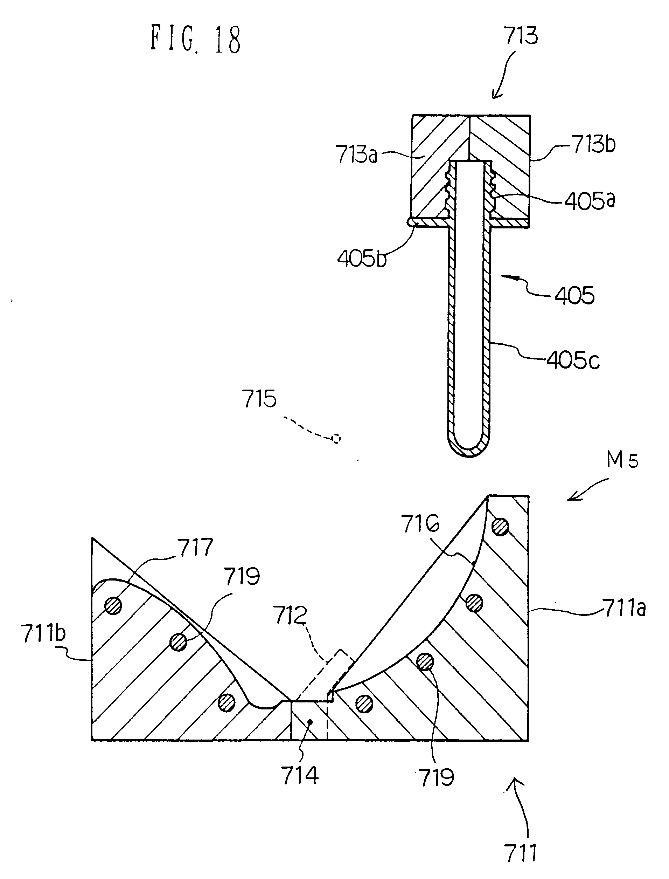

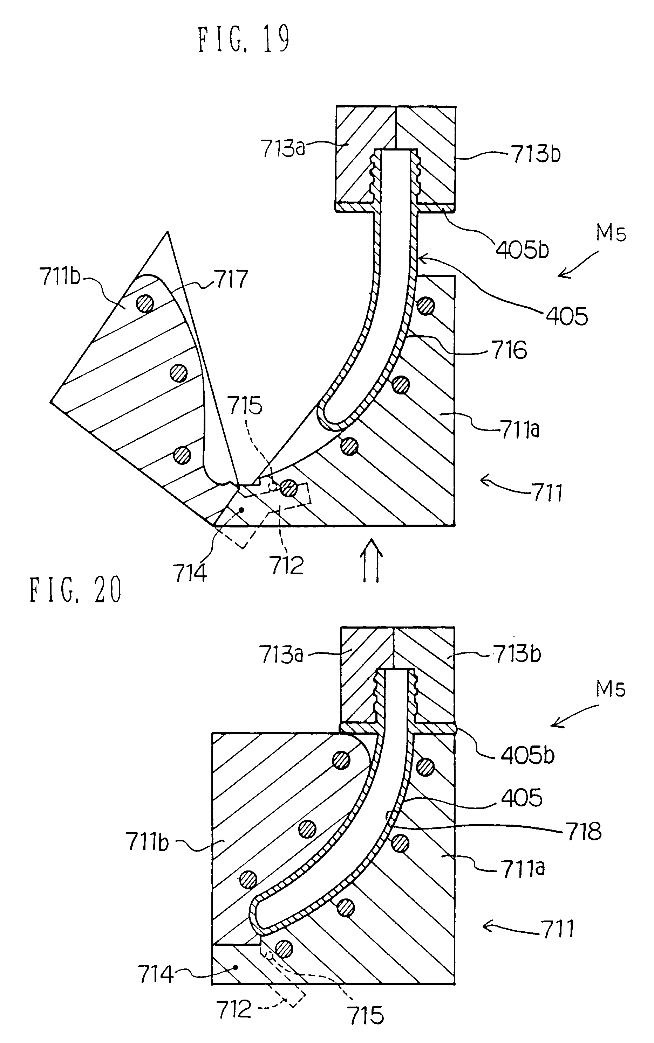

The stretched and softened parison 405 having been subjected to a uniaxial stretching operation and to a softening operation is held, at its mouth portion 405a, by the holder 713. The holder 713 comprises two half pieces 713a, 713b which are moved away from and toward each other to hold the parison 405 therebetween. The holder 713 is located in a position above the deforming mold 711. When the deforming mold 711 is raised gradually in a state wherein the deforming mold 711 is opened, the bottom of the body portion 405c of the parison 405 slidably contacts, as shown in FIGS.18 and 19, the arched surface 716 of the main body 711a, and the body portion 405c of the parison 405 is then bent along the arched surface 716. As the deforming mold 711 is moved upward, the supplementary body 711b of the deforming mold 711 is rotated in the clockwise direction by the cooperation of the operating pin 715 and the handle portion 712 of the supplementary body 711b.

When the deforming mold 711 is moved upward until the flange portion 405b of the parison 405 abuts against the upper surface of the deforming mold 711, the deforming mold 711 is stopped. At this time, the deforming mold 711 is completely closed, and the body portion 405c of the parison 405 is received completely in the space 718. Therefore, the body portion 405c is completely prevented from being exposed to the atmosphere. With this state, the heating temperature is adjusted. In order to carry out a heating treatment accurately, compressed air may be supplied into the parison 405 from its mouth thereby to cause the outer peripheral surface tightly to contact the arched surfaces 716, 717. This causes an increase of heat transfer rate.

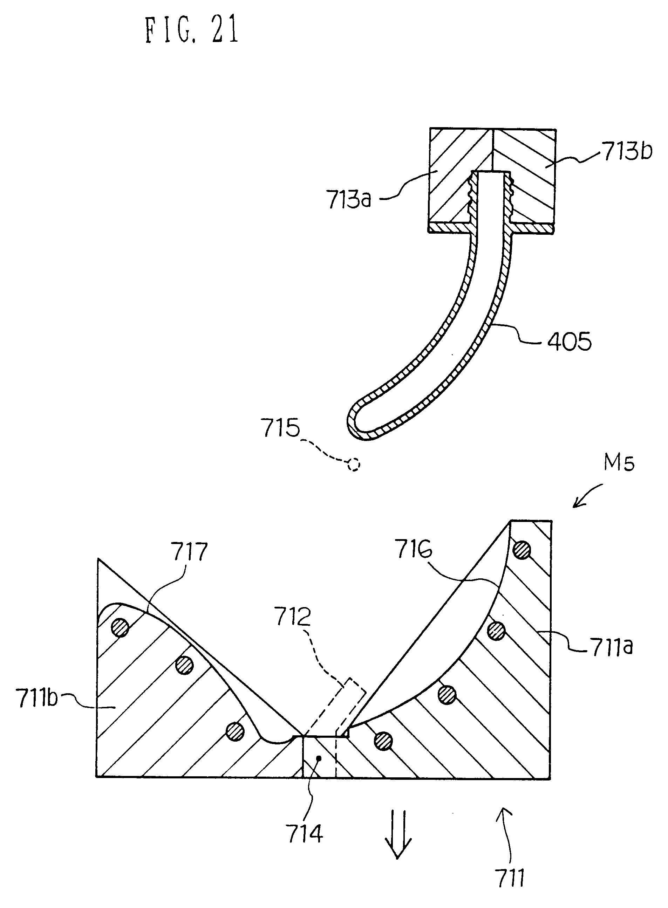

In this manner, after a deforming operation for the parison 405 has been completed, the deforming mold 711 starts to move downward. As the mold 711 is lowered, the supplementary body 711b is opened, and the curved and deformed parison 405 is taken out of the mold 711 as shown in FIG.21.

In the above manner, if the parison 405 is deformed under the condition where its body portion 405c is not exposed to the atmosphere, the adjustment of temperature can be performed easily, and the distribution of the temperature for the parison 405 can be properly maintained. This results in a deformed parison having a good quality.

An opening and closing means for opening and closing the deforming mold 711 may be a cam means, an air cylinder or a motor in addition to the combination of the operating pin 715 and the handle portion 712. Further, the supplementary body 711b may be adapted to move away from and toward the main body 711a in the lateral direction to open and close the deforming mold 711.

A concreate example of this embodiment will now be explained.

First, a cylindrical and straight parison having a bottom and made of polyethylene terephthalate risin is prepared. The wall thickness of its body portion was 3.2mm. This parison was heated at temperatures of 95°C to 120°C to be softened and is then stretched by a stretching rod only in its longitudinal direction. The wall thickness of the body portion of the parison subjected to a uniaxial stretching operation was 2.1mm. This stretched parison was deformed by the deforming mold 711, the whole portion of which was maintained at a temperature of 90°C.
Thus obtained deformed parison was set in the blow mold M₂ shown in FIG.13, whose temperature was about 50°C. The temperature of compressed air was 20°C, and the compressed air was supplied at an atmospheric pressure of 24. Thus obtained bottle had an even wall thickness of 0.35mm and its thick portion provided at the bottom of the bottle was located at the center position of its bottom.

## Claims

1. A stretch blow molding method for manufacturing an expanded bottle in which a parison is set in a blow mold to be expanded by air-blowing, comprising the steps of:
a) preparing a straight cylindrical parison (430) made of resin;
b) stretching the straight cylindrical parison (430) in its longitudinal direction so as to have a predetermined length;
c) curving the stretched parison (405) by bringing the stretched parison into contact with a curved and heated surface (435, 716) which is formed in a deforming mold (434, 711) the stretched parison being inserted into the deforming mold while the stretched parison contacts the curved and heated surface (435), the curved parison being removed from the deforming mold;
d) setting the curved parison in a cavity (404) inclinedly formed in the blow mold (M₂); and
e) blowing air into the curved parison thereby forming the bottle.

2. A stretch blow molding method according to claim 1, wherein said curved and heated surface (435, 716) has a semicircular shape in cross section for contacting an outer round surface of the stretched parison (405).

3. A stretch blow molding method according to claim 1, further comprising holding the stretched parison (405) by a holder (437, 713), and moving the deforming mold (434, 711) and the holder (437, 713) relatively away from and close to each other in a direction where the stretched parison is extended, and slidingly contacting the stretched parison (405) with the curved and heated surface (435, 716) when the holder and the deforming mold are moved close to each other during the curving step.

4. A stretch blow molding method according to claim 1, wherein the deforming mold (434) has an open space through which the stretched parison is inserted thereinto and the curved and heated surface (435) has a maximum radius of curvature near an upper opening of the open space.

5. A stretch blow molding method according to claim 1, wherein a plurality of heaters (436, 719) are disposed along the curved and heated surface (435, 716).

6. A stretch blow molding method acording to claim 1, wherein the step of stretching the straight cylindrical parison (405) includes stretching the straight cylindrical parison so as to have such a length that a bottom of the stretched and curved parison contacts an approximately center portion of a bottom of the cavity when the stretched and curved parison is set in the cavity (404) formed in the blow mold (M₂).

7. A stretch blow molding method according to claim 1, wherein the step of stretching the straight cylindrical parison (430) includes stretching the straight cylindrical parison unidirectionally by a stretching rod (432) while being heated.

8. A stretch blow molding method according to claim 1, wherein the deforming mold (711) comprises a main body (711a) having the curved and heated surface (716) formed therein and a supplementary body (711b) which is opened and closed with respect to the main body, a curved space (718) being formed for accommodating the parison when the supplementary and main bodies are closed, the supplementary body (711b) being automatically opened and closed when the supplementary body is moved respectively away from and close to a holder (713) for holding the stretched parison, the stretched parison slidingly contacting the curved and heated surface (716) when the holder (713) and the deforming mold (711) are moved close to each other.

9. A stretch blow molding method according to claim 8, wherein the main body (711a) and the supplementary body (711b) are pivotably connected to each other, the supplementary body (711b) being provided with a handle portion (712) which cooperates with an operating member (715) located on a moving path of the deforming mold (711) for opening and closing the supplementary body (711b).

10. A parison deforming mold for deforming or curving a stretched parison for carrying out a process of a stretching blow molding method for manufacturing a stretched bottle in which a stretched and curved parison is set in a blow mold, according to one of the claims 1 to 9, which comprises:
a) a curved surface (435, 716) for contacting the stretched parison (405); and
b) heating means (436, 719) for heating the curved surface.

11. A parison deforming mold according to claim 10, wherein the curved surface (435, 716) slidably contacts the stretched parison, the stretched parison being slidingly located on the curved surface.

12. A parison deforming mold according to claim 10, wherein the parison deforming mold is moved relative to a holder (437, 715) for holding the stretched parison (405).

13. A parison deforming mold according to claim 10, wherein the curved surface (716) is formed in a main body (711a) which is provided with a supplementary body (711b) automatically opened and closed with respect to the main body (711a) when the supplementary body (711b) is moved away from and close to the holder (715) for holding the stretched parison, a curved space (718) being formed for accommodating the parison when the two bodies are closed.

14. A stretched blow molded bottle having a flat reactangular body portion (2) and a cylindrical mouth portion (31) formed obliquely with respect to the body portion by a stretching blow molding method which comprises the steps of:
a) preparing a straight cylindrical parison (430) made of resin;
b) stretching the straight cylindrical parison (430) in its longitudinal direction so as to have a predetermined length;
c) curving the stretched parison (405);
d) setting the curved parison (405) in a cavity (404) inclinedly formed in a blow mold (M₂); and
e) blowing air into the curved parison.

15. A stretched blow molded bottle according to claim 14, wherein the mouth portion (31) is disposed within the extensions of two side surfaces (2a) and front and back surfaces (2b) defining the body portion of the bottle.

## Patentansprüche

1. Streckblas-Formverfahren zum Herstellen einer expandierten Flasche, bei dem ein Vorformling in eine Blasform eingesetzt wird, um durch Einblasen von Luft expandiert zu werden, mit den Schritten:
a) vorbereiten eines aus Harz gefertigten geradzylindrischen Vorformlings (430);
b) Strecken des geradzylindrischen Vorformlings (430) in seiner Längsrichtung, um ihm eine vorbestimmte Länge zu geben;
c) Krümmen des gestreckten Vorformlings (405), indem der gestreckte Vorformling mit einer gekrümmten und erwärmten Oberfläche (435, 716) in Berührung gebracht wird, die in einem Verformungs-Formteil (434, 711) ausgebildet ist, wobei der gestreckte Vorformling in das Verformungs-Formteil eingesetzt wird, wahrend der gestreckte Vorformling die gekrümmte und erwärmte Fläche (435) berührt, und der gekrümmte Vorformling aus dem Verformungs-Formteil entfernt wird;
d) Einsetzen des gekrümmten Vorformlings in einen Formhohlraum (404), der in der Blasform (M₂) schräg ausgebildet ist; und
e) Einblasen von Luft in den gekrümmten Vorformling, um dadurch die Flasche auszubilden.

2. Streckblas-Formverfahren nach Anspruch 1, bei dem die gekrümmte und erwärmte Fläche (435, 716) halbkreisförmigen Querschnitt besitzt zur Anlage an eine äußere gerundete Fläche des gestreckten Vorformlings (405).

3. Streckblas-Formverfahren nach Anspruch 1, bei dem weiter der gestreckte Vorformling (405) durch einen Halter (437, 713) gehalten und das Verformungs-Formteil (434, 711) und der Halter (437, 713) relativ voneinander weg und zueinander hin in einer Richtung bewegt werden, in der der gestreckte Vorformling verlängert ist, unter Gleitberührung des gestreckten Vorformlings (405) mit der gekrümmten und erwärmten Fläche (435, 716), wenn der Halter und das Verformungs-Formteil während des Krümmungsschrittes zueinander hin bewegt werden.

4. Streckblas-Formverfahren nach Anspruch 1, bei dem das Verformungs-Formteil (434) einen offenen Raum besitzt, durch welchen der gestreckte Vorformling in dieses eingesetzt wird und die gekrümmte und erwärmte Fläche (435) in der Nähe einer oberen Öffnung des offenen Raumes einen maximalen Krümmungsradius besitzt.

5. Streckblas-Formverfahren nach Anspruch 1, bei dem eine Vielzahl von Heizern (436, 719) längs der gekrümmten und erwärmten Oberfläche (435, 716) angeordnet ist.

6. Streckblas-Formverfahren nach Anspruch 1, bei der der Schritt des Streckens des geradzylindrischen Vorformlings (405) das Strecken des geradzylindrischen Hohlraums in solcher Weise enthält, daß er eine derartige Länge erhält, daß ein Boden des gestreckten und gekrümmten Vorformlings annähernd den Zentralabschnitt eines Hohlraumbodens berührt, wenn der gestreckte und gekrümmte Hohlraum in den in der Blasform (M₂) ausgebildeten Hohlraum (404) eingesetzt wird.

7. Streckblas-Formverfahren nach Anspruch 1, bei dem der Schritt des Streckens des geradzylindrischen Vorformlings (430) das in einer Richtung erfolgende Strecken des geradzylindrischen Vorformlings durch einen Streckstab (432) bei gleichzeitigem Erwärmen enthält.

8. Streckblas-Formverfahren nach Anspruch 1, bei dem das Verformungs-Formteil (711) einen Hauptkörper (711a) mit der darin ausgebildeten gekrümmten und beheizten Oberfläche (716) umfaßt und einen Zusatzkörper (711b), der mit Bezug auf den Hauptkörper geöffnet und geschlossen wird, wobei ein gekrümmter Raum (718) zum Aufnehmen des Vorformlings gebildet wird, wenn der Zusatz- und der Hauptkörper geschlossen werden, und der Zusatzkörper (711b) automatisch geöffnet bzw. geschlossen wird, wenn der Zusatzkörper von einem Halter (713) für den gestreckten Vorformling weg- bzw. zu ihm hinbewegt wird, und der gestreckte Vorformling gleitend die gebogene und beheizte Oberfläche (716) berührt, wenn der Halter (713) und das Verformungs-Formteil (711) aufeinander zu bewegt werden.

9. Streckblas-Formverfahren nach Anspruch 8, bei dem der Hauptkörper (711a) und der Zusatzkörper (711b) schwenkbar miteinander verbunden sind und der Zusatzkörper (711b) mit einem Griffabschnitt (712) versehen ist, der mit einem an dem Bewegungspfad des Verformungs-Formteils (711) angeordneten Betätigungsteil (715) zum öffnen bzw. Schließen des Zusatzkörpers (711b) zusammenwirkt.

10. Vorformlings-Verformteil zum Verformen oder Krümmen eines gestreckten Vorformlings zum Ausführen eines Vorgangs eines Streckblasformverfahrens zum Herstellen einer gestreckten Flasche, bei dem ein gestreckter und gekrümmter Vorformling in eine Blasform eingesetzt wird, nach einem der Ansprüche 1 bis 9, welche umfaßt:
a) eine gekrümmte Fläche (435,716) zur Berührung durch den gestreckten Vorformling (405); und
b) Beheizungsmittel (436, 719) zum Beheizen der gekrümmten Fläche.

11. Vorformlings-Verformteil nach Anspruch 10, bei dem die gekrümmte Fläche (435, 716) den gestreckten Vorformling gleitend berührt und der gestreckte Vorformling gleitend an der gekrümmten Fläche angeordnet wird.

12. Vorformlings-Verformteil nach Anspruch 10, bei dem das Vorformlings-Verformteil relativ zu einem Kalter (437, 715) zum Halten des gestreckten Vorformlings (405) bewegt wird.

13. Vorformlings-Verformteil nach Anspruch 10, bei dem die gekrümmte Fläche (716) in einem Hauptkörper (711a) ausgebildet ist, der mit einem Zusatzkörper (711b ) versehen ist, der mit Bezug auf den Hauptkörper (711) automatisch geöffnet bzw. geschlossen wird, wenn der Zusatzkörper (711b) von dem Kalter (715) zum Halten des gestreckten Vorformlings weg bzw. zu ihm hin bewegt wird, wobei ein gekrümmter Raum (718) zum Aufnehmen des Hohlraums gebildet wird, wenn die beiden Körper geschlossen sind.

14. Streckblasgeformte Flasche mit einem flachen rechtwinkligen Körperabschnitt (2) und einem zylindrischen Halsabschnitt (31), der schräg mit Bezug auf den Körperabschnitt durch ein Streckblasformverfahren gebildet ist, das die Schritte umfaßt:
a) Herstellen eines geradzylindrischen Vorformlings (430) aus Harz;
b) Strecken des geradzylindrischen Vorformlings (430) in seiner Längsrichtung bis zu einer vorbestimmten Länge;
c) Krümmen des gestreckten Vorformlings (405);
d) Einsetzen des gekrümmten Vorformlings (405) in einen Hohlraum (404), der schräg in einer Blasform (M₂) ausgebildet ist; und
e) Einblasen von Luft in den gekrümmten Vorformling.

15. Streckblasgeformte Flasche nach Anspruch 14, bei der der Halsabschnitt (31) innerhalb der Ausmaße der zwei Seitenflächen (2a) und der Vorder- und Rückflächen (2b) ausgebildet ist, welche den Körperabschnitt der Flasche bestimmen.

## Revendications

1. Procédé de moulage par étirage-soufflage pour la fabrication d'une bouteille expansée dans lequel une préforme est placée dans un moule de soufflage pour expansion par soufflage d'air, comprenant les étapes consistant à:
a) préparer une préforme cylindrique rectiligne (430) faite de résine ;
b) étirer la préforme cylindrique rectiligne (430) dans sa direction longitudinale de façon à obtenir une longueur prédéterminée ;
c) plier la préforme étirée (405) en amenant la préforme étirée en contact avec une surface courbe et chauffée (435, 716) qui est formée dans un moule de déformation (434, 711) la préforme étirée étant insérée dans le moule de déformation alors que la préforme étirée entre en contact avec la surface courbe et chauffée (435), la préforme pliée étant retirée du moule de déformation;
d) placer la préforme pliée dans une cavité (404) formée de façon inclinée dans le moule de soufflage (M₂) ; et
e) souffler l'air dans la préforme pliée de façon à former la bouteille.

2. Procédé de moulage par étirage-soufflage selon la revendication 1, dans lequel ladite surface courbe et chauffée (435, 716) présente une section transversale de forme semi-circulaire pour entrer en contact avec une surface arrondie extérieure de la préforme étirée (405).

3. Procédé de moulage par étirage-soufflage selon la revendication 1, consistant de plus à maintenir la préforme étirée (405) à l'aide d'un support (437, 713) et à déplacer relativement le moule de déformation (434, 711) et le support (437, 713) à l'écart et à proximité l'un de l'autre dans une direction dans laquelle la préforme d'étirage est expansée et à mettre en contact par glissement la préforme étirée (405) avec la surface courbe et chauffée (435, 716) lorsque le support et le moule de déformation sont rapprochés l'un de l'autre pendant l'étape de pliage.

4. Procédé de moulage par étirage-soufflage selon la revendication 1, dans lequel le moule de déformation (434) comporte un espace ouvert à travers lequel la préforme étirée est insérée dans le moule et dans lequel la surface chauffée et courbe (435) possède un rayon de courbure maximal à proximité d'une ouverture supérieure de l'espace ouvert.

5. Procédé de moulage par étirage-soufflage selon la revendication 1, dans lequel une pluralité de dispositifs chauffants (436, 719) sont disposés le long de la surface courbe et chauffée (435, 716).

6. Procédé de moulage par étirage-soufflage selon la revendication 1, dans lequel l'étape consistant à étirer la préforme cylindrique rectiligne (405) consiste à étirer la préforme cylindrique rectiligne de façon à obtenir une longueur telle que le fond de la préforme étirée et pliée soit en contact avec la partie approximativement centrale du fond de la cavité lorsque la préforme étirée et pliée est placée dans la cavité (404) formée dans le moule de soufflage (M₂).

7. Procédé de moulage par étirage-soufflage selon la revendication 1, dans lequel l'étape consistant à étirer la préforme cylindrique rectiligne (430) inclut l'étirage de la préforme cylindrique rectiligne dans une seule direction par l'intermédiaire d'une tige d'étirage (432) tout en étant chauffée.

8. Procédé de moulage par étirage-soufflage selon la revendication 1, dans lequel le moule de déformation (711) comprend un corps principal (711a) comportant, formée à l'intérieur, la surface courbe et chauffée (716) et un corps supplémentaire (711b) qui est ouvert et fermé par rapport au corps principal, un espace courbe (718) étant formé pour s'adapter à la préforme lorsque les corps principal et supplémentaire sont fermés, le corps supplémentaire (711b) étant ouvert et fermé automatiquement lorsque le corps supplémentaire est déplacé respectivement à l'écart et au voisinage d'un support (713) destiné à soutenir la préforme étirée , la préforme étirée étant en contact glissant avec la surface courbe et chauffée (716) lorsque le support (713) et le moule de déformation (711) sont placés au voisinage l'un de l'autre .

9. Procédé de moulage par étirage-soufflage selon la revendication 8, dans lequel le corps principal (711a) et le corps supplémentaire (711b) sont connectés l'un à l'autre de façon à pouvoir pivoter, le corps supplémentaire (711b) étant prévu avec une partie de poignée (712) qui coopère avec un élément de fonctionnement (715) placé sur un trajet de déplacement du moule de déformation (711) pour ouvrir et fermer le corps supplémentaire (711b).

10. Moule de déformation d'une préforme pour déformer ou plier une préforme étirée afin de réaliser le processus d'un procédé de moulage par étirage-soufflage en vue de fabriquer une bouteille étirée dans lequel une préforme étirée et pliée est placée dans un moule de soufflage, selon l'une des revendications 1 à 9 , lequel comprend :
a) une surface courbe (435, 716) pour être en contact avec la préforme étirée (405) ; et
b) des moyens de chauffage (436, 719) pour chauffer la surface courbe .

11. Moule de déformation d'une préforme selon la revendication 10, dans lequel la surface courbe (435, 716) est en contact de glissement avec la préforme étirée, la préforme étirée étant placée de façon à glisser sur la surface courbe .

12. Moule de déformation d'une préforme selon la revendication 10, dans lequel le moule de déformation de la préforme est déplacé par rapport à un support (437, 715) destiné à maintenir la préforme d'étirage (405).

13. Moule de déformation d'une préforme selon la revendication 10, dans lequel la surface courbe (716) est formée dans un corps principal (711a) qui est prévu avec un corps supplémentaire (711b) ouvert et fermé automatiquement par rapport au corps principal (711a) lorsque le corps supplémentaire (711b) est éloigné et rapproché du support (715) destiné à maintenir la préforme étirée un espace courbe (718) étant formé pour s'adapter à la préforme lorsque les deux corps sont fermés.

14. Bouteille moulée par étirage-soufflage comportant une partie de corps plate et rectangulaire (2) et une partie d'ouverture cylindrique (31) configurée de façon oblique par rapport à la partie de corps selon un procédé de moulage par étirage-soufflage qui comprend les étapes consistant à :
a) préparer une préforme cylindrique rectiligne (430), faite de résine ;
b) étirer la préforme cylindrique rectiligne (430) dans sa direction longitudinale de façon à obtenir une longueur prédéterminée ;
c) plier la préforme d'étirage (405) ;
d) placer la préforme pliée (405) dans une cavité (404) formée de façon inclinée dans un moule de soufflage (M₂) ; et
e) souffler de l'air dans la préforme pliée.

15. Bouteille moulée par étirage-soufflage selon la revendication 14, dans laquelle la partie d'ouverture 31 est disposée à l'intérieur des prolongements des deux surfaces latérales (2a) et des surfaces avant et arrière (2b) définissant la partie de corps de la bouteille.
